# EUROPÄISCHE PATENTSCHRIFT

(11) **EP 1 055 896 B1**
(45) Veröffentlichungstag und Bekanntmachung des Hinweises auf die Patenterteilung: **18.05.2005**
(21) Anmeldenummer: 00110582.4
(22) Anmeldetag: 18.05.2000
(51) Int. Cl.: F28D 9/00

(54) **Ölkühler**
Oil cooler
Refroidisseur d'huile

(30) Priorität: 22.05.1999 DE 19923652
(43) Veröffentlichungstag der Anmeldung: 29.11.2000
(73) Patentinhaber: Modine Manufacturing Company, Racine, Wisconsin 53403-2552 (US)
(72) Erfinder: Käsinger, Rainer, 72221 Haiterbach (DE); Müller, Olaf, 38550 Isenbüttel (DE)
(74) Vertreter: Wolter, Klaus-Dietrich

(56) Entgegenhaltungen:
- DE-A- 3 824 074
- US-A- 5 590 709
- US-A- 5 797 450

## Beschreibung

Die Erfindung betrifft einen Ölkühler der aus einem Plattenpaket besteht, mit dem sich abwechselnde Strömungskanäle für das Öl und für das Kühlmittel gebildet sind, wobei das Plattenpaket und die das Plattenpaket abdeckende Grund - oder Deckplatte von mindestens einem Sammelraum durchbrochen ist, in dem oder an dessen Mündung Elemente aus Kunststoff lösbar befestigt sind, die ein Verbindungsteil aufweisen, sowie mit zwischen der Grund - oder Deckplatte und einem Aggregat, dessen Öl zu kühlen ist, vorgesehener Dichtung, die einen Abdichtungsbereich um die Mündung eines Sammelraumes bildet oder die mehrere Mündungen von mehreren Sammelräumen umfaßt.

Solche Ölkühler sind in mehrfacher Modifikation auf dem Markt und werden erfolgreich bspw. zur Kühlung von Getriebeöl verwendet.
Der beschriebene Ölkühler ist dem in DE 38 24 073 C2 gezeigten Ölkühler ähnlich, obwohl dessen Elemente nicht als aus Kunststoff bestehend angegeben worden sind und Verbindungsteile dort nicht vorhanden sind. Sollen die Elemente aus Kunststoff hergestellt werden, bietet sich deren Herstellung mittels Spritzgußtechnik an, wie es auch im EP 751 364 B1 gezeigt und beschrieben worden ist. Insbesondere lassen sich Strömungsumlenkelemente für zwei Sammelräume aus einem Stück mittels Spritzgießen herstellen und in die Sammelräume in einer einzigen Operation einsetzen, was erhebliche fertigungstechnische Vorteile hat, weil individuelle Montagefehler eingeschränkt werden können.
Nichtsdestotrotz besteht weiterhin Bedarf, fertigungstechnische Fortschritte zu erreichen, beispielsweise im Bereich der Dichtungen, die ebenfalls von Hand einzulegen sind, wobei durch ungenaues Einlegen Fertigungsfehler auftreten können, die in der Folge zu Undichtigkeiten führen. Darüber hinaus kann das Einlegen der Dichtung völlig übersehen werden, was selbstverständlich zu Beanstandungen führen muß.
Ferner müssen zur Lagefixierung der Dichtung, die oft eine Ringdichtung ist, auf der Oberfläche der Grundplatte des Ölkühlers in Abständen Nasen oder dergleichen angeformt werden, was als nachteilig angesehen werden kann. Das gleiche muß natürlich auch an der Deckplatte vorgesehen werden, falls die Abdichtung zu einem darüber angeordneten Ölfilter gewünscht wird.
Zur Abdichtung von Sammelkästen aus Kunststoff mit dem zugehörigen Rohrboden, bspw. bei Wasserkühlern, ist es bekannt, die dafür erforderliche Dichtung unmittelbar an den Dichtrand des Sammelkastens anzuspritzen, damit das Einlegen der Dichtung entfallen kann. Deshalb scheint es naheliegend zu sein, bei anderen Wärmetauschern ebenfalls nach Möglichkeiten zum Entfall des Einlegens der Dichtung zu suchen. Jedoch scheiterten solche Überlegungen bei Ölkühlem bisher daran, daß dort Sammelkästen aus Kunststoff nicht zum Einsatz kommen. Gewöhnlich sind aus einem Plattenpaket bestehende Ölkühler komplett aus Aluminium hergestellt, wobei die Einzelteile durch Löten verbunden werden. Da bleibt kein Raum, um über das Anspritzen von Dichtungen nachzudenken, da solche Dichtungen selbstverständlich erst nach dem Löten angebracht werden können.

Die Aufgabe der Erfindung besteht darin, die Herstellung der im Oberbegriff beschriebenen Ölkühler durch den Entfall des separaten Einlegens der Dichtungen und ferner dadurch zu vereinfachen, daß zusätzliche Vorteile für die Ausbildung des Ölkühlers selbst erreicht werden sollen.

Diese Aufgabe wurde erfindungsgemäß dadurch gelöst, daß das Verbindungsteil der oder des Elementes auf der Grund - oder der Deckplatte aufliegt und sich als flache Struktur bis zum Abdichtungsbereich erstreckt, um dort an einer Umrandung zu enden, die um den gesamten Umfang des Abdichtungsbereiches herum orientiert ist und an der die Dichtung befestigt ist.
Durch die erfindungsgemäße Ausbildung kann die Deck-und/oder die Grundplatte, auf der die Dichtung mit dem Verbindungsteil aufliegt, einfacher hergestellt werden, ohne daß die Dichtwirkung eingeschränkt wird. Die im Stand der Technik vorgesehenen Nasen zur Lagepositionierung der Dichtung können entfallen. Nach der Erfindung erfolgt die Lagepositionierung der Dichtung in einem ersten Ausführungsbeispiel durch das Einführen der Elemente in den Sammelraum des Ölkühlers.
Die Elemente sind hier als Strömungsumlenkelemente ausgebildet, die das Öl innerhalb des Ölkühlers veranlassen, auch die äußeren Bereiche der Platten zu beströmen. Dadurch wird der Wärmeaustausch verbessert.
Bei einem anderen Ausführungsbeispiel sind die Elemente quasi als Zentrierring ausgebildet, der lediglich an der Mündung des Sammelraumes eingeclipst oder anderweitig lösbar befestigt ist.
Die erfindungsgemäßen Ölkühler lassen sich besser in eine automatisierte Fertigungslinie einordnen, weil das Einlegen und Positionieren der Dichtung an exakt der gleichen Stelle erfolgt und unabhängig von subjektiven Einflüssen ist.
Letztlich führt die Erfindung beim Kühlerhersteller zur Reduzierung der Anzahl der Einzelteile und damit zu logistischen Vorteilen. Die angesprochenen Elemente werden von spezialisierten Lieferanten hergestellt und komplett mit der Dichtung angeliefert.
Weitere Merkmale ergeben sich aus den Ansprüchen und aus der nachfolgenden Beschreibung von Ausführungsbeispielen.
Die beiliegenden Figuren zeigen:
- Fig. 1: Querschnitt durch einen Ölkühler eines ersten Ausführungsbeispieles;
- Fig. 2: perspektivische Ansicht eines Ölkühlers in einem zweiten Ausführungsbeispiel;
- Fig. 3: Einzelteil des Ölkühlers aus Fig. 1;
- Fig. 4: Ansicht von Fig. 3;
- Fig. 5: Querschnitt durch das Umfangsteil von Fig. 4;
- Fig. 6: Variante von Fig. 4
- Fig. 7: Querschnitt durch das Umfangsteil von Fig. 6

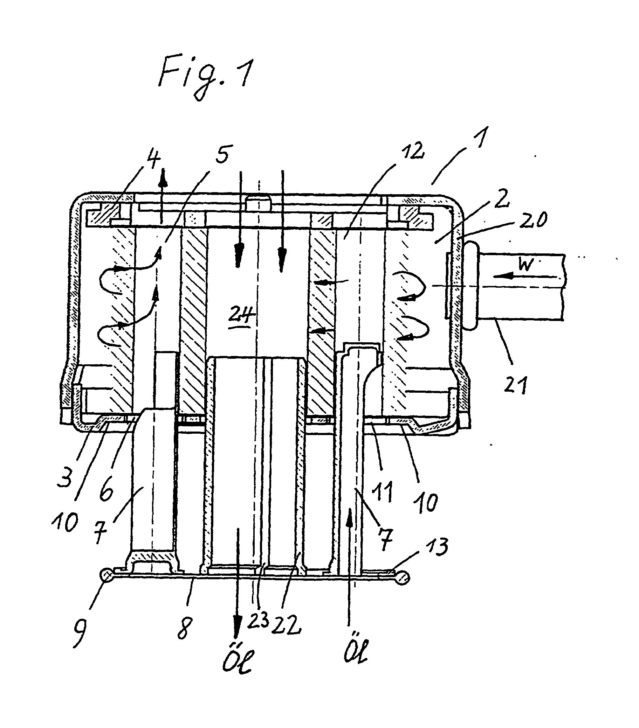

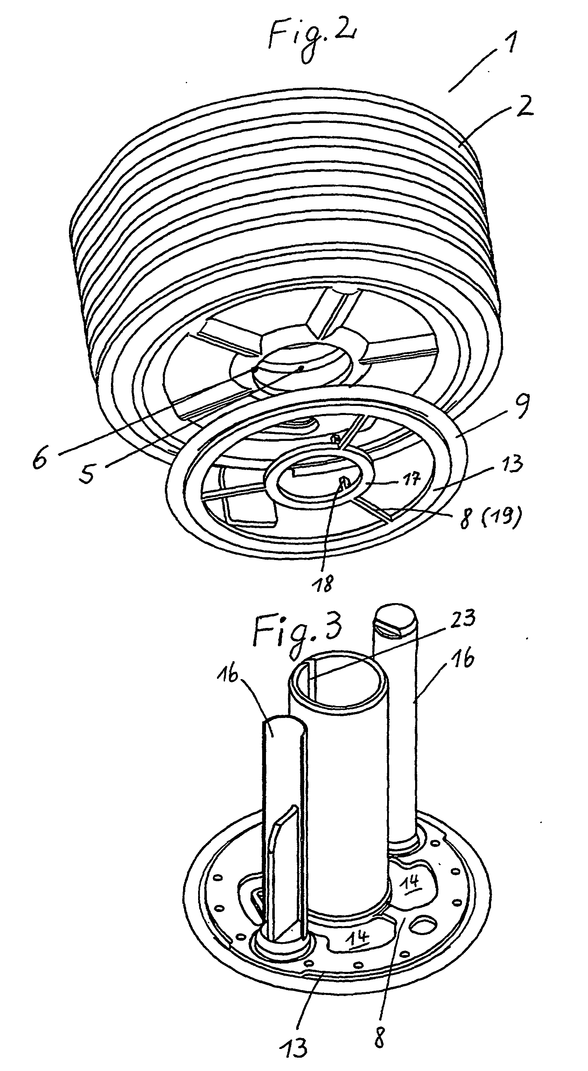

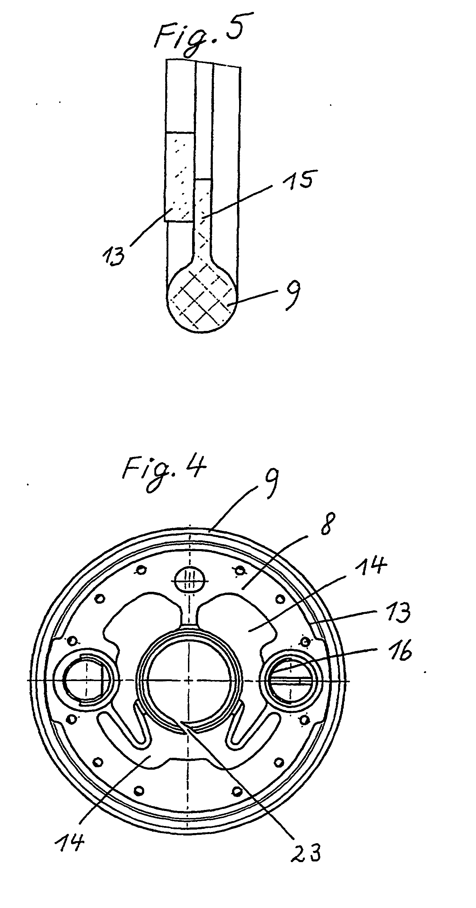

Der wassergekühlte Ölkühler gemäß Fig. 1 besitzt ein Gehäuse 20, in dem in einer Öffnung ein Stutzen 21 eingelötet wurde. Es kann sich hierbei um den Eintrittsstutzen für das Kühlwasser handeln. Der Austrittsstutzen liegt in einer anderen Ebene. In dem Gehäuse 20 befindet sich ein Plattenpaket 2, dessen Aufbau dem Stand der Technik entnommen werden kann und deshalb nicht im Detail gezeichnet wurde. Das Plattenpaket 2 besitzt eine Grundplatte 3 und eine Deckplatte 4. In diesem Ausführungsbeispiel ist das Plattenpaket 2 sowie Grund-und Deckplatte 3; 4 von den Sammelräümen 5 und 12 durchbrochen. Der Sammelraum 5 weist eine Mündung 6 auf und der Sammelraum 12 die Mündung 11. Das Wasser strömt in das Gehäuse 20 ein, zwischen den Platten des Plattenpakets 2 hindurch und an einer anderen Stelle tritt das Wasser wieder aus dem Gehäuse 20 aus. Das Öl tritt in den Sammelraum 12 ein, wird innerhalb der durch Platten gebildeten Kanäle mittels der als Strömungsumlenkelemente 16 ausgebildeten Elemente 7 zunächst zur Peripherie des Ölkühlers, also nach rechts, geleitet, wie es die Pfeile zeigen und strömt dann nach links, zum Sammelraum 5, aus dem es nach oben in einen nicht gezeichneten Filter strömt, um aus diesem, durch den zentralen Kanal 24, zurück in das unterhalb angeordnete Aggregat zu gelangen. In den Sammelräumen 5 und 12 sind Elemente 7 bzw. die Strömungsumlenkelemente 16 lösbar befestigt. In der Zeichnung sind diese Elemente 7 nur teilweise in die Sammelräume 5; 12 eingeschoben worden, um die Details besser herausstellen zu können. Es versteht sich von selbst, daß im betriebsbereiten Zustand die Elemente 7 vollständig in den Sammelräumen 5 und 12 eingeschoben sind, so daß das Verbindungsteil 8 zwischen den Elementen 7 an der Grundplatte 3 anliegt.
Der zentrale Kanal 24 ist in diesem Ausführungsbeispiel mit einer Hülse 22 ausgekleidet, die ebenfalls aus Kunststoff besteht und Bestandteil der Elemente 7 ist, was jedoch nicht zwangsläufig so sein muß. Von Interesse ist jedoch, daß die Hülse über ihren gesamten Längenbereich mit einem Längsspalt 23 (siehe auch Fig. 3 und 4) versehen ist. Dadurch wurde eine hervorragende Möglichkeit geschaffen, unter Ausnutzung der elastischen Eigenschaften des Kunststoffes, die Hülse 22 und damit das gesamte Kunststoffteil zu befestigen. Beim Einschieben in den Kanal 24 wird der Längsspalt 23 zusammengedrückt und verschlossen. Die dabei auftretende radiale Spannung hält das Kunststoffteil in Position.
Nach unten, zu einem nicht gezeichneten Aggregat, dessen Öl zu kühlen ist, muß eine gute Abdichtung nach außen gewährleistet sein. Deshalb erstreckt sich das Verbindungsteil 8 der Elemente 7 bis zur Umrandung 13. An der Umrandung 13 wurde eine Dichtung 9 angeklebt, die nach dem Einführen des Kunststoffteiles im Abdichtungsbereich 10 an der Grundplatte 3 zur Anlage kommt.
An der Grundplatte 3 sind keinerlei Positionierungsmittel für die Dichtung 9 erforderlich.
Die Fig. 2 zeigt einen Ölkühler, der zur gehäuselosen Bauart gehören könnte, bei dem also sowohl die Kanäle für das Öl als auch die Kanäle für das Wasser allein durch die Ausbildung der Platten gebildet und getrennt sind. Auch an einem solchen Ölkühler muß eine Abdichtung zum Aggregat hin erfolgen, die dort so ausgeführt ist, daß ein Zentrierring 17 mit Rastnasen 18 versehen wurde.
Die Rastnasen 18 greifen in die Mündung 6 des Sammelraumes 5 ein und legen somit auch die Position der Dichtung 9 fest, die wiederum an der Umrandung 13 befestigt wurde. Zwischen dem Zentrierring 17 sind Verbindungselemente 8 angeordnet, die als flache Stege 19 ausgeführt sind.
Die Fig. 4 zeigt eine Ansicht von unten auf das Kunststoffteil. Das Verbindungsteil 8 besitzt ziemlich große Durchbrüche 14. In der Nähe der Umrandung 13 sind ringsherum weitere, jedoch kleine, Durchbrüche vorgesehen, die der Befestigung der Dichtung 9 dienen, insbesondere wenn diese aufvulkanisiert werden soll. Aus dieser Darstellung und auch aus Fig. 3 kann die Form der Strömungsumlenkelemente 16 erkannt werden, die etwa halbrund ist, wobei die halbrunde Kontur jeweils zum Zentrum des Ölkühlers 1 hin angeordnet ist, um die bereits angesprochene Beströmung der Peripherie des Ölkühlers zu erreichen.

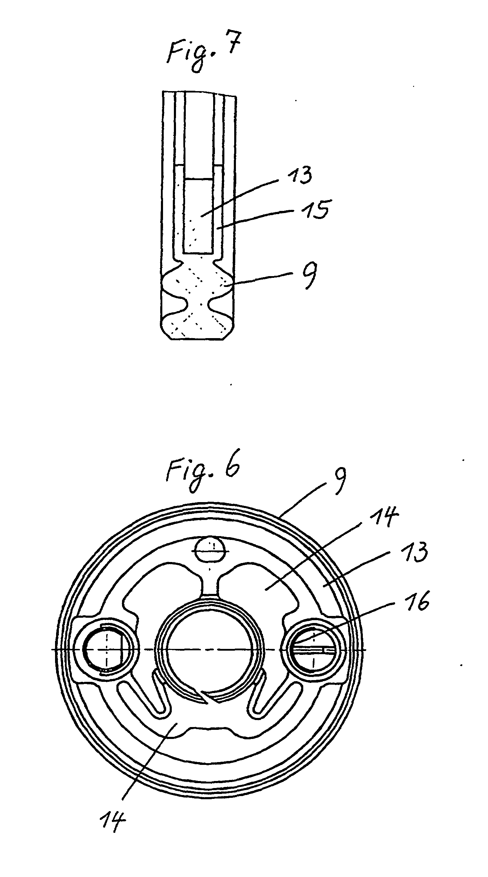

Die Fig. 5 zeigt eine im Querschnitt runde Dichtung 9, die mit ihrem Rand 15 an der Umrandung 13 angeklebt worden ist.
Die Fig. 6 und 7 zeigen eine andere Art der Befestigung der Dichtung 9 an der Umrandung 13, bei der der Rand 15 u-förmig ausgebildet worden ist, um die Umrandung 13 aufnehmen zu können.
Eine solche Befestigung läßt eine höhere Festigkeit erwarten. Die Dichtung 9 hat hier eine wellenförmige Kontur, die bessere Dichtungseigenschaften verspricht.

## Patentansprüche

1. Ölkühler (1) der aus einem Plattenpaket (2) besteht, mit dem sich abwechselnde Strömungskanäle für das Öl und für das Kühlmittel gebildet sind, wobei das Plattenpaket (2) und die das Plattenpaket (2) abdeckende Grund-oder Deckplatte (3:4) von mindestens einem Sammelraum (5) durchbrochen ist, in dem oder an dessen Mündung (6) Elemente (7) aus Kunststoff lösbar befestigt sind, die ein Verbindungsteil (8) aufweisen, sowie mit zwischen der Grund-oder Deckplatte und einem Aggregat, dessen Öl zu kühlen ist, vorgesehener Dichtung (9), die einen Abdichtungsbereich (10) um die Mündung (6) eines Sammelraumes (5) bildet oder die mehrere Mündungen (6;11) von mehreren Sammelräumen (5:12) umfaßt,
**dadurch gekennzeichnet, daß**
das Verbindungsteil (8) der oder des Elementels (7) auf der Grund - oder der Deckplatte (3; 4) aufliegt und sich als flache Struktur bis zum Abdichtungsbereich (10) erstreckt, um dort an einer Umrandung (13) zu enden, die um den gesamten Umfang des Abdichtungsbereiches (10) herum orientiert ist und an der die Dichtung (9) befestigt ist.

2. Ölkühler nach Anspruch 1, **dadurch gekennzeichnet, daß** das Verbindungsteil (8) mehrere Durchbrüche (14) aufweist.

3. Ölkühler nach den Ansprüchen 1 und 2, **dadurch gekennzeichnet, daß** die Dichtung (9) an der Umrandung (13) angeklebt, angeclipst, aufvulkanisiert oder anderweitig befestigt ist und die Umrandung (13) durchgehend oder mit Unterbrechungen ausgebildet ist

4. Ölkühler nach den vorstehenden Ansprüchen, **dadurch gekennzeichnet, daß** die Dichtung (9) im Abdichtungsbereich (10) einen runden Querschnitt aufweist oder wellenförmige Konturen besitzt und einen inneren Rand (15) hat, der zur Befestigung an der Umrandung (13) vorgesehen ist.

5. Ölkühler nach Anspruch 1, **dadurch gekennzeichnet, daß** die Elemente (7) Strömungsumlenkelemente (16) sind, die sich in jeden Öl - Sammelraum (5;12) erstrecken und bewirken, daß das Öl möglichst die gesamte Wärmetauschfläche der Platten des Plattenpaketes (2) beströmt, wobei das Verbindungsteil (8) die beiden Strömungsumlenkelemente (16) und die Umrandung (13) mit denselben verbindet

6. Ölkühler nach Anspruch 5, **dadurch gekennzeichnet, daß** die Elemente (7) bedarfsweise auch eine Hülse (22) umfassen, die einen Längsspalt (23) in ihrer Wandung aufweist, der beim Einführen in einen Kanal (24), der durch den Ölkühler hindurchgeht, unter Spannung zusammengedrückt wird.

7. Ölkühler nach den Ansprüchen 1 bis 4, **dadurch gekennzeichnet, daß** das Element (7) als Zentrierring (17) ausgebildet ist, der Rasthaken (18) aufweist, um an der Mündung (6) des Sammelraumes (5) eingesteckt zu werden und das Verbindungsteil (8) zur Umrandung (13) aus flachen, einzelnen Stegen (19) besteht.

8. Ölkühler nach Anspruch 7, **dadurch gekennzeichnet, daß** am Zentrierring (17) drei Rasthaken (18), am Umfang verteilt, vorgesehen sind und daß drei Stege (19), am Umfang verteilt, vom Zentrierring (17) zur Umrandung (13) angeordnet sind.

9. Ölkühler nach einem der vorstehenden Ansprüche, **dadurch gekennzeichnet, daß** Element (7), Verbindungsteil (8) und Umrandung (13) als ein einziges Bauteil mittels Spritzgießen hergestellt ist.

## Claims

1. Oil cooler (1), which consists of a plate stack (2), by means of which alternating flow ducts for the oil and for the coolant are formed, the plate stack (2) and the base or cover plate (3; 4) which covers the plate stack (2) being pierced by at least one collecting space (5), in which or at the issue (6) of which are releasably fastened plastic elements (7) which have a connection part (8), and with a seal (9) which is provided between the base or cover plate and an assembly, the oil of which is to be cooled, and which forms a sealing-off region (10) around the issue (6) of a collecting space (5) or which surrounds a plurality of issues (6; 11) of a plurality of collecting spaces (5; 12), **characterized in that** the connection part (8) of the elements or element (7) lies on the base or the cover plate (3; 4) and extends as a flat structure as far as the sealing-off region (10), in order to terminate there at a border (13) which is oriented around the entire circumference of the sealing-off region (10) and to which the seal (9) is fastened.

2. Oil cooler according to Claim 1, **characterized in that** the connection part (8) has a plurality of perforations (14).

3. Oil cooler according to Claims 1 and 2,
**characterized in that** the seal (9) is glued, snapped, vulcanized or otherwise fastened onto the border (13), and the border (13) is formed continuously or with interruptions.

4. Oil cooler according to the preceding claims, **characterized in that** the seal (9) has a round cross section or possesses wavy contours in the sealing-off region (10) and has an inner edge (15) which is intended to be fastened to the border (13).

5. Oil cooler according to Claim 1, **characterized in that** the elements (7) are flow deflection elements (16) which extend into each oil collecting space (5; 12) and have the effect that the oil flows to the greatest possible extent over the entire heat exchange surface of the plates of the plate stack (2), the connection part (8) connecting the two flow deflection elements (16) and connecting the border (13) to these.

6. Oil cooler according to Claim 5, **characterized in that** the elements (7) also comprise, as required, a sleeve (22) which has in its wall a longitudinal gap (23) which is compressed under tension during introduction into a duct (24) which passes through the oil cooler.

7. Oil cooler according to Claims 1 to 4,
**characterized in that** the element (7) is designed as a centring ring (17) which has latching hooks (18), in order to be inserted at the issue (6) of the collecting space (5), and the connection part (8) with respect to the border (13) consists of flat individual webs (19).

8. Oil cooler according to Claim 7, **characterized in that** three latching hooks (18) are provided, distributed on the circumference, on the centring ring (17), and **in that** three webs (19) are arranged, distributed on the circumference, from the centring ring (17) to the border (13).

9. Oil cooler according to one of the preceding claims, **characterized in that** element (7), connection part (8) and border (13) are produced as a single component by means of injection moulding.

## Revendications

1. Refroidisseur d'huile (1) constitué d'un paquet de plaques (2), avec lequel est formée une alternance de conduits d'écoulement pour l'huile et pour le réfrigérant, le paquet de plaques (2) et la plaque de base ou de recouvrement (3 ; 4) recouvrant le paquet de plaques (2) étant ouvert par au moins un espace collecteur (5) dans lequel ou au niveau de l'embouchure (6) duquel des éléments (7) en matière plastique sont fixés de manière détachable et présentent une partie de connexion (8), et comprenant un joint d'étanchéité (9) prévu entre la plaque de base ou de recouvrement et une unité dont on veut refroidir l'huile, ce joint d'étanchéité formant une zone d'étanchéité (10) autour de l'embouchure (6) d'un espace collecteur (5) ou comprenant plusieurs embouchures (6 ; 11) de plusieurs espaces collecteurs (5 ; 12),
**caractérisé en ce que**
la partie de connexion (8) du ou des éléments (7) s'applique sur la plaque de base ou de recouvrement (3 ; 4) et s'étend sous forme de structure plate jusque dans la zone d'étanchéité (10) afin de s'y terminer contre un bord périphérique (13) qui est orienté tout autour de la périphérie totale de la zone d'étanchéité (10) et contre lequel est fixé le joint d'étanchéité (9).

2. Refroidisseur d'huile selon la revendication 1,
**caractérisé en ce que** la partie de connexion (8) présente plusieurs ouvertures (14).

3. Refroidisseur d'huile selon les revendications 1 et 2, **caractérisé en ce que** le joint d'étanchéité (9) est collé, encliqueté, vulcanisé ou fixé d'une autre manière sur le bord périphérique (13) et le bord périphérique (13) est réalisé en continu ou avec des interruptions.

4. Refroidisseur d'huile selon les revendications précédentes, **caractérisé en ce que** le joint d'étanchéité (9) présente une section transversale ronde dans la zone d'étanchéité (10) ou possède des contours en forme ondulée et un bord interne (15) qui est prévu pour être fixé sur le bord périphérique (13).

5. Refroidisseur d'huile selon la revendication 1,
**caractérisé en ce que** les éléments (7) sont des éléments de déviation de l'écoulement (16), qui s'étendent dans chaque espace collecteur d'huile (5 ; 12) et font en sorte que l'huile s'écoule autant que possible sur toute la surface d'échange de chaleur des plaques du paquet de plaques (2), la partie de connexion (8) reliant les deux éléments de déviation de l'écoulement (16) et le bord périphérique (13) à ceux-ci.

6. Refroidisseur d'huile selon la revendication 5,
**caractérisé en ce que** les élément (7) comprennent aussi au besoin une gaine (22) qui présente une fente longitudinale (23) dans sa paroi, laquelle est comprimée sous tension lors de l'introduction dans un canal (24) qui traverse le refroidisseur d'huile.

7. Refroidisseur d'huile selon les revendications 1 à 4, **caractérisé en ce que** l'élément (7) est réalisé sous forme d'anneau de centrage (17), qui présente des crochets d'encliquetage (18) afin d'être enfiché sur l'embouchure (6) de l'espace collecteur (5) et la partie de connexion (8) au bord périphérique (13) se compose de nervures individuelles plates (19).

8. Refroidisseur d'huile selon la revendication 7,
**caractérisé en ce que** trois crochets d'encliquetage (18), répartis sur la périphérie, sont prévus sur l'anneau de centrage (17) et **en ce que** trois nervures (19), réparties sur la périphérie, sont disposées de l'anneau de centrage (17) vers le bord périphérique (13).

9. Refroidisseur d'huile selon l'une quelconque des revendications précédentes, **caractérisé en ce que** l'élément (7), la partie de connexion (8) et le bord périphérique (13) sont fabriqués sous forme de composant unique au moyen d'un moulage par injection.
